# EUROPÄISCHE PATENTSCHRIFT

(11) **EP 0 951 197 B1**
(45) Veröffentlichungstag und Bekanntmachung des Hinweises auf die Patenterteilung: **15.06.2005**
(21) Anmeldenummer: 99104317.5
(22) Anmeldetag: 04.03.1999
(51) Int. Cl.: H04Q 11/04, H04L 12/64, H04M 11/06

(54) **Verfahren und Vorrichtung zur Übertragung von aufgezeichneten Ton- und Bildreportagen**
Method and apparatus to transmit recorded video and voice reports
Dispositif et procédé pour transmettre des reportages vocaux et video enregistrés

(30) Priorität: 16.04.1998 DE 19816861
(43) Veröffentlichungstag der Anmeldung: 20.10.1999
(73) Patentinhaber: Deutsche Telekom AG, 53113 Bonn (DE)
(72) Erfinder: Gussner, Max-Michael, 64287 Darmstadt (DE); Dintelmann, Friedrich Dr., 64354 Reinheim (DE)

(56) Entgegenhaltungen:
- EP-A2- 0 719 068
- OHNSORGE H: "Broadband communication: the key to advanced terminals" COMPEURO '89., 'VLSI AND COMPUTER PERIPHERALS. VLSI AND MICROELECTRONIC APPLICATIONS IN INTELLIGENT PERIPHERALS AND THEIR INTERCONNECTION NETWORKS', PROCEEDINGS. HAMBURG, WEST GERMANY 8-12 MAY 1989, WASHINGTON, DC, USA,IEEE COMPUT. SOC. PR, US, 8. Mai 1989 (1989-05-08), Seiten P-10-P-15, XP010016126 ISBN: 0-8186-1940-6
- LINDBERGH D: "THE H.324 MULTIMEDIA COMMUNICATION STANDARD" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 46-51, XP000636453 ISSN: 0163-6804
- VON DER STRATEN G ET AL: "An object-oriented implementation of B-ISDN signalling" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA,IEEE, 1. Mai 1994 (1994-05-01), Seiten 885-890, XP010126758 ISBN: 0-7803-1825-0
- MATSUMOTO M ET AL: "A proposal for a connection method to a public network using infrared media" 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6 - 10, 1995, IEEE INTERNATIONAL CONFERENCE ON UNIVERSAL PERSONAL COMMUNICATIONS, NEW YORK, IEEE, US, Bd. CONF. 4, 6. November 1995 (1995-11-06), Seiten 506-511, XP010160591 ISBN: 0-7803-2955-4
- DI ZENOBIO D ET AL: "A microcell/macrocell architecture to access multimedia communication services" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28. April 1996 (1996-04-28), Seiten 968-972, XP010162533 ISBN: 0-7803-3157-5
- MEADE P.: 'CYBERBOOTHS: THE NEW PAYPHONE?' AMERICA'S NETWORK, ADVANSTAR COMMUNICATIONS Bd. 101, Nr. 11, 01 Juni 1997, CLEVELAND, OH, US, Seite 44, 46, XP000856676

## Beschreibung

Die Erfindung betrifft ein Verfahren und eine Vorrichtung zur Übertragung von aufgezeichneten Ton- und Bildreportagen nach dem Oberbegriff des Patentanspruchs 1 bzw. des Patentanspruchs 3.

Es ist grundsätzlich bekannt, zur Übertragung großer Datenströme hochbitratige Übertragungswege und Übertragungsverfahren einzusetzen. Die Übertragungswege werden in der Regel als Festverbindungen betrieben oder für vereinbarte Zeiträume von einem Netzbetreiber gegen Entgelt zur Verfügung gestellt. Wesentliche Nachteile dieser Lösung sind, daß sowohl bei fest geschalteten als auch bei zeitlich befristet zur Verfügung gestellten Verbindungen Signalquellen und -senken örtlich fixiert sind und die Verbindungsendpunkte nur mit Aufwand geändert werden können. Flexiblere Lösungen auf der Basis von Satellitenübertragungen sind oft teurer als terrestrische Standardlösungen und verlangen jeweils die Errichtung von Erdfunk- bzw. -empfangsstellen bei der Signalquelle bzw. -senke.

Zur Übertragung von Signalen unterschiedlichster Ausprägung, wie zum Beispiel Sprache, Musik, Video oder Daten mit hoher Datenrate wird zum Beispiel auch das bekannte ATM-Übertragungsverfahren (Asynchronous Transfer Mode) eingesetzt. Bei diesem asynchronen Verfahren werden die zu übertragenden Daten in Zellen von jeweils 53 Byte Länge gepackt, wobei 48 Bytes für Daten und 5 Bytes für Steuerfunktionen reserviert sind. Das Verfahren erlaubt eine flexible effektive Bandbreitenzuweisung und läßt sich dadurch optimal an die Bedürfnisse des Kunden anpassen. Das ATM-Übertragungsverfahren und seine Anwendungen sind in dem Buch von H. Seiberts, "ATM-Breitband-Applikationen", Franzis Verlag, 65622 Feldkirchen, (ISBN-Nr.: 3-7723-79912-5) beschrieben.

Das ATM-Übertragungsverfahren (Asynchronous Transfer Mode) sowie der H-324 Multimedia Communication Standard sind ausführlich in folgenden zwei Veröffentlichungen beschrieben:
1. OHNSORGE H: 'Broadband communication: the key to advanced terminals' 89., 'VLSI AND COMPUTER PERIPHERALS. VLSI AND MICROELECTRONIC APPLICATIONS IN INTELLIGENT PERIPHERALS AND THEIR INTERCONNECTION NETWORKS', PROCEEDINGS. HAMBURG, WEST GERMANY 8-12 MAY 1989, WASHINGTON, DC, USA, IEEE COMPUT. SOC. PR, US, 8. Mai 1989 (1989-05-08), Seiten P-10-P-15, XP010016126 ISBN: 0-8186-1940-6 und
2. LINDBERGH D: 'THE H.324 MULTIMEDIA COMMUNICATION STANDARD" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 46-51, XP000636453 ISSN: 0163-6804.

In diesen Veröffentlichungen wird auch darauf hingewiesen, dass spezielle Workstations und Terminals so aufgebaut werden können und über Glasfaserleitungen oder ähnliche Verbindungen, auch Funkverbindungen, mit hohen Bitübertragungsraten miteinander verbunden werden können, zwecks Übertragung von Video- und Audio- sowie Datenströmen und daß dabei besondere Multiplexer und Steuerprogramme verwendet werden. Außerdem ist zum Beispiel in der Fig. 7 der erstgenannten Veröffentlichung ein Beispiel für eine B-ISDN-IBFN-Systemkonfiguration gezeigt, die eine schnelle Übertragung von bestimmten Workstations oder Terminals oder Faxeinrichtungen über ein Telefonnetzwerk zeigt.

In der Veröffentlichung von 'VON DER STRATEN G ET AL: 'An object-oriented implementation of B-ISDN signalling' COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA. USA 1-5 May 1994, NEW YORK, NY, USA, IEEE, 1. Mai 1994 (1994-05-01), Seiten 885-890, XPO10126758 ISBN: 0-7803-1825-0 ist ebenfalls die Entwicklung der B-ISDN (Broad Band Integrated Services Digital Network) Systeme beschrieben und die mögliche Zusammenarbeit mit ATM, das heißt im Asynchronous Transfer Mode. Hier sind mehrere Pilotsysteme beschrieben die eine schnelle Übertragung, das heißt eine hochbitratige Übertragung von Daten, Bildern u.s.w. erlauben.

In der Veröffentlichung "MATSUMOTO M ET AL: 'A proposal for a connection method to a public network using infrared media' 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6-10, 1995, IEEE International CONFERENCE ON UNIVERSAL PERSONAL COMMUNICATIONS, NEW YORK, IEEE, US, Bd. CONF. 4, 6. November 1995 (1995-11-06), Seiten 506-511, XP010160591 ISBN: 0-7803-2955-4" wird eine Methode der körperlosen Infrarot-Verbindung (IR) sowie zur Funkverbindung zu einem Fernsprechnetzwerk diskutiert. Es werden mehrere Beispiele gezeigt, die die Vorteile der Infrarotverbindung aufzeigen. In all den beschriebenen Veröffentlichungen ist jedoch keine Lösung beschrieben oder gezeigt, wie man auf technisch hochqualitativen und preislich attraktiven Wege aufgezeichnete Video- oder Audioreportagen oder ähnliche schnell zu übermittelnde Informationen über öffentlich zugängliche Telefonzellen lösen kann.

Durch die Europäische Patentanmeldung EP 0 719 068 A2 ist eine ATM-Netzwerk-Architektur bekannt, die eine Out-of-Band-Signalisierung verwendet, die unter Verwendung von SS7-Informationen, verbunden mit den bekannten Mechanismen eine individualiserte Behandlung von Einzelverbindungen zwischen CO (Central Office) im ATM-Verbindungsnetz ermöglicht. Kennzeichnend für dieses Verfahren ist eine Zuordnung von Einzelverbindungen in Bündeln zwischen verschiedenen Central Offices. Bei diesem Verfahren sind beide Netze permanent bereit und haben jeweils nur einen einzigen Zweck, entweder werden Nutzdaten übertragen oder Signalisierungsdaten. Die Resourcenzuordnung erfolgt also nur netzintern.

In den Veröffentlichungen sind lediglich Lösungen offenbart, die zum Anwählen der Datensenken und zum Übertragen der Daten-, Bild- und Tonaufzeichnungen das gleiche Netz benutzen wie zum Beispiel ISDN.

Der Erfindung liegt die Aufgabe zugrunde, ein Verfahren und eine Vorrichtung zur Übertragung von insbesondere von aufgezeichneten Ton- und Bildreportagen von öffentlichen Telefonzellen aus zu schaffen, die die Vorteile hochbitratiger Übertragungsverfahren und -wege wie das ATM-Übertragungsverfahren, nutzen und zum anderen genügend Flexibilität besitzen, und die für Anwender, die kurzfristig und zeitlich befristet Daten zu übertragen haben, technisch hochqualitativ und preislich attraktiv sein sollen.

Die erfindungsgemäße Lösung der Aufgabe für das Verfahren ist im Kennzeichen des Patentanspruchs 1 charakterisiert.

Die erfindungsgemäße Lösung der Aufgabe für die Vorrichtung ist im Kennzeichen des Patentanspruchs 3 wiedergegeben.

Weitere Lösungen bzw. Ausgestaltungen des Erfindungsgegenstands sind im Kennzeichen des Patentanspruchs 2 für das Verfahren und im Kennzeichen des Patentanspruchs 4 für die Vorrichtung charakterisiert.

Es wird ein hiermit effektives und technisch qualitativ hochwertiges Verfahren zur Übertragung von Daten, Ton- und Bildreportagen nach der Aufzeichnung, zum Beispiel durch Bild- oder Tonjournalisten, aus besonders gekennzeichneten Telefonzellen, wie zum Beispiel öffentlichen Telefonzellen, mit einem hochbitratigen Anschluss an das Weitverkehrsnetz zu einer Datensenke oder mehreren Datensenken angegeben. Die Übertragung zwischen dem Daten- bzw. Bildspeicher und/oder Sprachspeicher des Kunden und einem Datenübergabepunkt, wie zum Beispiel in einer öffentlichen Telefonzelle, kann sowohl leitergebunden als auch ohne körperliche Verbindung erfolgen. Der Verbindungsaufbau zu einer Datensenke oder mehreren erfolgt entweder über ein Telefon oder direkt ohne körperliche Verbindung zwischen Datenübergabepunkt und dem jeweiligen Speicher für Bild und/oder Daten des Kunden. Die Anordnung ist durch einen Datenübergabepunkt gekennzeichnet, der die Daten, Bilder und/oder Musik bzw. Daten in zum Beispiel ATM-Zellen verpackt und über eine hochbitratige Leitung zu einem ATM-Switch/Knoten im Weitverkehrsnetz leitet. Damit ist eine technisch hochqualitative, hochbitratige Übertragung von einer Telefonzelle aus mit einem Datenübergabepunkt zu einem Ziel durch Anwählen über ein normales Telefon oder mittels entsprechender Signalisierung möglich.

Durch die Tatsache, daß eine öffentlich zugängliche Telefonzelle über einen Anschluß, der die Übertragung hoher Datenströme zuläßt, an das öffentliche Telekommunikationsnetz, wie zum Beispiel das T-Net der Deutschen Telekom AG, angeschlossen ist, wird die kurzzeitige und befristete Übertragung von großen Datenmengen, wie sie zum Beispiel bei der journalistischen Berichterstattung in Bild und Ton anfallen, von auf diese Art und Weise angeschlossenen Telefonzellen aus zu den jeweiligen Redaktionen möglich. Der Vorteil einer solchen Lösung besteht darin, daß der Versand aufgezeichneter Daten durch Kurier entfallen kann, daß eine zeitnahe Berichterstattung möglich ist und daß die Mitführung von Satellitenterminals, sogenannte "Fly away-Geräte" entfällt.

Die große Flexibilität einer solchen Lösung für den Nutzer wird dadurch erreicht, daß die Übertragung zum angewählten Empfänger über einen ATM-Zugangsmultiplexer in der Telefonzelle erfolgt, wodurch eine definierte Übertragungsqualität garantiert werden kann.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

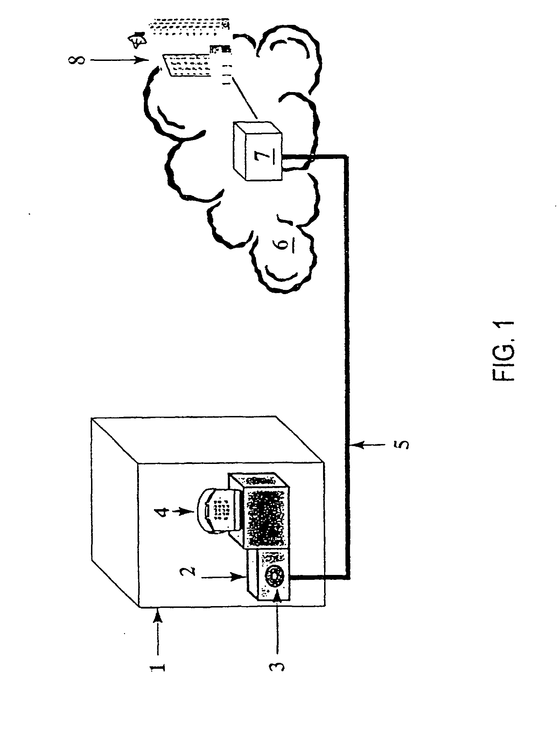

- Fig. 1: eine Telefonzelle zur Übertragung hochbitratiger Signale in ein öffentliches Kommunikationsnetz.

In Fig. 1 ist ein Ausführungsbeispiel anhand einer Telefonzelle 1 dargestellt, die zur Übertragung hochbitratiger Signale an ein öffentliches Kommunikationsnetz mit einer hochbitratigen Leitung 5 an das Weitverkehrsnetz 6 angeschlossen ist. Der Anschluß wird im Weitverkehrsnetz 6 durch einen ATM-Switch/Knoten 7 realisiert. In der Telefonzelle 1 mit einem öffentlichen Telefon 4 ist ein Zugangsgerät 2 gezeigt, das die am Daten-Übergabepunkt 3 eingespeisten Daten in ATM-Zellen verpackt und zu dem ATM-Switch/Knoten 7 über die hochbitratige Leitung 5 mit zum Beispiel 155 Mbit/s überträgt. Von dort werden die Daten zur Datensenke 8 übertragen. Der Verbindungsaufbau zur Datensenke 8 wird über das Telefon 4 in der zum Beispiel besonders gekennzeichneten Telefonzelle 1 oder direkt ohne körperliche Verbindung zwischen Daten-Übergabepunkt 3 und Datenspeicher des Kunden eingeleitet. Es soll hier noch bemerkt werden, daß die Übertragung zwischen dem Datenspeicher des Kunden und dem Daten-Übergabepunkt 3 sowohl leitergebunden als auch ohne körperliche Verbindung erfolgen kann. Der Datenübergabepunkt 3 ist mit einem bekannten ATM-Zugangsmultiplexer ausgerüstet, wodurch für die weitere Übertragung eine definierte Übertragungsqualität erreicht wird. Die Telefonzelle 1 oder eine Kabine ist mit einem öffentlichen Telefon 4 ausgerüstet, über das der Verbindungsaufbau zu der Datensenke 8 eingeleitet wird. Das Telefon 4 selbst ist an ein öffentliches Fernmeldenetz angeschlossen. Es leitet die Verbindung der die Bilder, Daten, Sprache oder Musik darstellenden digitalen Signale mit hoher Bitrate über das Zugangsgerät 2 mit Daten-Übergabepunkt 3 mit zum Beispiel ATM-Zugangsmultiplexer zu einem ATM-Switch/Knoten 7 im Weitverkehrsnetz 6 ein. Alternativ kann der Aufbau auch durch entsprechende Signalisierung eingeleitet werden. Die Telefonzellen 1 bzw. Kabinen, die diese Zusatzausrüstung haben, sollen entsprechend gekennzeichnet sein. Die Daten bzw. Signale werden von dem ATM-Zugangsmultiplexer des Daten-Übergabepunktes 3 im Zusatzgerät 2 in ATM-Zellen verpackt und auf die hochbitratige Leitung 5 gegeben. Von da aus gelangen die Daten bzw. Signale zu dem ATM-Switch/Knoten 7 im Weitverkehrsnetz 6, zum Beispiel dem ATM-Netz der Deutschen Telekom AG. Da der Verbindungsaufbau zur Datensenke 8 bereits eingeleitet ist, werden die Daten zu der gewünschten Datensenke 8 übertragen, wo sie dann entsprechend empfangen werden können. Es muß hier ausdrücklich bemerkt werden, daß die Datensenke 8 nicht nur aus einem, sondern aus mehreren Empfängern bestehen kann.

Das Zugangsgerät 2 selbst ist so ausgebildet, daß alle gebräuchlichen Standards, wie zum Beispiel Frame Relay, X.25, ATM und IP unterstützt werden. Auch der Verbindungsaufbau kann über eine nicht körperliche Verbindung von der Datenquelle aus zum Datenübergabepunkt 3 hergestellt werden. Die Richtung der Übertragungseinleitung kann umgekehrt werden, so daß die ursprüngliche Datensenke zur Datenquelle wird und die ursprüngliche Datenquelle zur Datensenke. Dies bedeutet eine anrufbare Telefonzelle 1 für hochbitratige Datenübertragung.

### Liste der Bezugszeichen

- 1: Telefonzelle
- 2: Zugangsgerät
- 3: Übergabepunkt oder Daten-Übergabepunkt
- 4: öffentliches Telefon
- 5: hochbitratige Anschlußleitung an den ATM-Switch/Knoten
- 6: Weitverkehrsnetz
- 7: ATM-Switch/Knoten
- 8: Datensenke

## Patentansprüche

1. Verfahren zur Übertragung von Daten, Ton- und Bildreportagen nach der Aufzeichnung durch Personen mittels Aufzeichnungsträgern als Datenquelle von einem Übergabepunkt zu einer anwählbaren Datensenke über ein in einer öffentlich zugänglichen Telefonzelle (1) oder Kabine vorhandenes Telefon (4), wobei der Verbindungsaufbau zu der gewünschten Datensenke (8) durch Anwählen auf bekannte Art und Weise über ein erstes, insbesondere öffentliches, Telefonnetz eingeleitet wird, **dadurch gekennzeichnet,**
**daß** die Übertragung der Daten-, Ton- und Bildreportagen mittels hochbitratiger Signale über ein Zugangsgerät (2) mit Datenübergabepunkt (3) für ein zweites Netz im Asynchronous Transfer Mode, ATM, erfolgt,
**daß** mit Hilfe eines ATM-Zugangsmultiplexers die Daten-, Ton- oder BildSignale paketiert werden und die Weiterleitung (5) zu einem Switch/Knoten (7) in einem Weitverkehrsnetz (6) erfolgt und
**daß** die Daten-, Ton- und Bildaufzeichnungssignale von dort aus auf die angewählte Datensenke (8) geleitet werden.

2. Verfahren nach Patentanspruch 1, **dadurch gekennzeichnet,**
**daß** nationale und internationale Standards, wie zum Beispiel Frame Relay, X.25, ATM und IP, an den Datenübergabepunkten (3) in den Telefonzellen oder -kabinen (1) unterstützt werden.

3. Vorrichtung mit einer öffentlich zugänglichen Telefonzelle oder -kabine, deren Telefon mit einem ersten, insbesondere öffentlichen, Telefonnetz sowie einem Datenübergabepunkt (3) für Daten-, Bild- und Tonaufzeichnungen zur Durchführung des Verfahrens nach Patentanspruch 1 ausgerüstet ist,
wobei die Telefonzelle oder -kabine (1) mit dem Zugangsgerät (2) mit Datenübergabepunkt (3) für hohe Bitraten eines zweiten Netzes ausgerüstet ist,
und wobei das Zugangsgerät (2) über einen ATM-Zugangsmultiplexer mit einem im Asynchronous Transfer Mode, ATM, betriebenen Switch/Knoten (7) eines Weitverkehrsnetzes (6) verbunden ist.

4. Vorrichtung nach Patentanspruch 3, **dadurch gekennzeichnet,**
**daß** das zweite Netz zwischen dem Daten-Übergabepunkt (3) und der Datenquelle (8) als nichtkörperliche Verbindung, insbesondere Funkverbindung, für die Datenübergabe realisiert ist.

## Claims

1. Method for the transmission of data reports, audio reports and image reports, after the recording thereof by persons using recording media, as data source, from an interchange point to a selectable data sink through a telephone (4) located in a publicly accessible telephone booth or telephone kiosk (1), the connection set-up to the desired data sink (8) being initiated by dialing in a known manner over a first, in particular public, telephone network, **characterized in that**
the transmission of data reports, audio reports and image reports takes place by means of high-bit-rate signals through an access device (2) with a data interchange point (3) for a second network in the Asynchronous Transfer Mode, ATM,
**in that** the data signals, audio signals or image signals are packetized with the aid of an ATM access multiplexer and forwarding (5) takes place to a switch/node (7) in a wide-area network (6) and
**in that**, from there, the recorded data signals, recorded audio signals and recorded image signals are sent to the selected data sink (8).

2. Method according to claim 1, **characterized in that**
national and international standards, for example such as Frame Relay, X.25, ATM and IP, are supported at the data interchange points (3) in the telephone booths or telephone kiosks (1).

3. Device with a publicly accessible telephone booth or telephone kiosk whose telephone is connected to a first, in particular public, telephone network and is equipped with a data interchange point for data recordings, audio recordings and image recordings to carry out the method according to claim 1,
the telephone booth or telephone kiosk (1) being equipped with the access device (2) with data interchange point (3) for high bit rates of a second network,
and the access device being connected through an ATM access multiplexer to a switch/node (7) of a wide-area network (6), said switch/node operating in the Asynchronous Transfer Mode, ATM.

4. Device according to claim 3, **characterized in that**
the second network between the data interchange point (3) and the data source (8) is implemented as a non-physical connection, in particular a radio connection, for the data transmission.

## Revendications

1. Procédé pour la transmission de données, de reportages sonores et photographiques après enregistrement par des personnes au moyen de supports d'enregistrement comme source de données, à partir d'un point de jonction vers un collecteur de données pouvant être appelé par sélection au moyen d'un téléphone (4) se trouvant dans une cabine téléphonique accessible au public (1), la connexion vers le collecteur de données (8) étant établie par un appel traditionnel à partir d'un premier réseau téléphonique, notamment public, **caractérisé en ce que**
la transmission de données, de reportages sonores et photographiques s'effectue au moyen de signaux haut débit par l'intermédiaire d'un équipement d'accès (2) avec point de jonction de données (3) pour un deuxième réseau en mode de transfert asynchrone, ATM,
les signaux de données, sonores et photographiques sont regroupés en paquets à l'aide d'un multiplexeur ATM et le réacheminement (5) sur un équipement de commutation/noeud (7) s'effectue dans un réseau longue distance (6) et
les signaux d'enregistrement de données, de sons et d'images sont réacheminés à partir de cet équipement vers le collecteur de données sélectionné (8).

2. Procédé selon la revendication 1, **caractérisé en ce que**
les standards nationaux et internationaux, tels que Frame Relay, X.25, ATM et IP, sont soutenus aux points de jonction de données (3) dans les cabines téléphoniques (1).

3. Dispositif avec une cabine téléphonique accessible au public dont le téléphone est relié à un premier réseau téléphonique, notamment public, et doté d'un point de jonction de données pour enregistrement de données, de sons et d'images en vue de l'application du procédé selon la revendication 1,
la cabine téléphonique (1) étant dotée de l'équipement d'accès (2) avec point de jonction de données (3) haut débit d'un deuxième réseau,
et l'équipement d'accès étant relié avec un équipement de commutation/noeud (7) exploité en mode de transfert asynchrone, ATM, d'un réseau longue distance (6) via un multiplexeur d'accès ATM.

4. Dispositif selon la revendication 3, **caractérisé en ce que**
le deuxième réseau est réalisé pour le transfert de données entre le point de jonction de données (3) et la source de données (8) comme liaison non physique, notamment comme liaison radioélectrique.
